# EUROPEAN PATENT APPLICATION

(11) **EP 3 587 527 A1**
(43) Date of publication of application: **01.01.2020**
(21) Application number: 18181050.8
(22) Date of filing: 30.06.2018
(51) Int. Cl.: C09J 7/40

(54) **FULL (PER)FLUORO POLYMER LINER FOR ADHESIVE TAPES**

(71) Applicant: 3M Innovative Properties Company, Saint Paul, MN 55133-3427 (US)
(72) Inventor: Zipplies, Dr. Tilman, 84489 Burghausen (DE); Yavuz, Nurettin, 40223 Düsseldorf (DE); Clever, Sebastian, 41199 Mönchengladbach (DE); Schönbild, Simone, 41464 Neuss (DE); Doelen, Leon, 41189 Mönchengladbach (DE); Jürgens, Michael, 41199 Mönchengladbach (DE); Zehentmaier, Sebastian, 83119 Obing (DE)
(74) Representative: Hettstedt, Stephan

(57) **Abstract**

The present disclosure provides an adhesive article, comprising
(a) an adhesive layer having a first major surface and a second major surface opposite to the first major surface;
(b) at least one release liner essentially consisting of a fluoropolymer, wherein the release liner has a first major surface and a second major surface opposite the first major surface, wherein either the first or second major surface have a common interface with the first or second major surface of the adhesive layer.

## Description

### Field

The present disclosure relates to adhesive articles such as films, sheets or tapes comprising an adhesive layer and at least one liner comprising a fluoropolymer. The present disclosure further relates to cured void fillers obtained by curing said curable compositions. In another aspect, the present disclosure relates to the use of the adhesive articles as described herein in manufacturing processes in aerospace, automotive, abrasives or electronics industries.

### Background

Adhesive films or adhesive tapes in all forms and shapes are usually provided with at least one liner covering the adhesive surface. This has a benefit in that the adhesive surface is protected against moisture, dirt and other influences which could be detrimental to the desired adhesive performance. Secondly, in a lot of cases, adhesive films or tapes are delivered either in staples of stripes or, more important for industrial applications, in wound rolls such as level-wound rolls. In all of these cases, it must be ensured that the adhesive surfaces do not stick to other strips, or to the next layer of the level-wound roll, since otherwise roll-off performance would drop or, even worse, damage may occur to the tape.

Moreover, a constant and often precisely defined release force of the liner from the adhesive surface is required for a number of industrial processes and applications of liner-provided tapes and films. In addition, in case of level-wound rolls, one side of the liner contacts the adhesive surface of the film or tape, while the opposite surface of the liner contacts the adjacent film or tape. This requires in most cases that the two opposite surfaces of the liner exhibit different release forces since the film or tape is usually needed to be unwound without the liner detaching from the adhesive surface. This is achieved in the state of the art by using liners coated with so-called release compositions, which are mostly silicone-based, and in some case fluoropolymer-based. For example, EP 2813556 relates to the use of a silicone-coated liner to decrease the adhesion between the liner and the adhesive. However, it was found that in some applications, the use of silicone-containing liners may give rise to problems. In particular, some of the silicone or containing organic compounds may bleed or diffuse from the release composition into the adhesive layer, giving rise to undesired side effects. Furthermore, the presence of some silicone or fluorine compounds on surfaces may be problematic if they are to be further treated by painting. This is in particular true for manufacturing applications in which one side of the adhesive tape is adhered to a surface, while the liner is still in place on the other surface of the adhesive tape and will remain there for certain process steps, e.g. coating and/or painting before being removed. As such, release liners comprising a hardcoat layer on its surface are also known in the art. For example, US 2009/0000727 describes a release layer obtained from curing methacrylates.

In addition, it is known that many high performance adhesive tapes have very high adhesion strength to many substrates so that the choice of suitable liners is limited. To overcome this issue, liners are for this additional reason coated with silicones or fluoro materials which are reducing the surface energy of the liner. Due to the chemical inertness of these materials, the bond between carrier material (PET, PP, paper etc.) and the coat is poor so that it can be easily removed by mechanical work.

For example, WO 9735719 describes a LDPE film having a density of 0.865 to 0.900 g/mL and a polydispersity of < 3. The release properties of this polymer are not as good as this of the release coating, but better than that of other plastics (PP, MDPE, HDPE, PET). The LDPE becomes soft at temperatures above 60 to 80 °C so that this liner is not suitable for hot coats with adhesives.

Without contesting the technical advantages associated with liners for adhesive articles such as films and tapes in the art, there is still a strong need for liners for liners and adhesive articles exhibiting a certain property profile including good mechanical properties, good release properties, chemical inertness, no or low bleed-out of release coating substances and resistance to certain materials used in industrial processes, in particular to paint and coatings common in automotive industries.

Other advantages of the adhesive articles and its uses of the present disclosure will be apparent from the following description.

### Summary

The present disclosure provides an adhesive article, comprising
(a) an adhesive layer having a first major surface and a second major surface opposite to the first major surface;
(b) at least one release liner essentially consisting of a fluoropolymer, wherein the release liner has a first major surface and a second major surface opposite the first major surface, wherein either the first or second major surface have a common interface with the first or second major surface of the adhesive layer.

The present disclosure also provides a use of the adhesive articles as described herein for industrial applications.

### Detailed Description

Before any embodiments of this disclosure are explained in detail, it is to be understood that the disclosure is not limited in its application to the details of construction and the arrangement of components set forth in the following description. The invention is capable of other embodiments and of being practiced or of being carried out in various ways. As used herein, the term "a", "an", and "the" are used interchangeably and mean one or more; and "and/or" is used to indicate one or both stated cases may occur, for example A and/or B includes, (A and B) and (A or B). Also herein, recitation of ranges by endpoints includes all numbers subsumed within that range (e.g., 1 to 10 includes 1.4, 1.9, 2.33, 5.75, 9.98, etc.). Also herein, recitation of "at least one" includes all numbers of one and greater (e.g., at least 2, at least 4, at least 6, at least 8, at least 10, at least 25, at least 50, at least 100, etc.). Also, it is to be understood that the phraseology and terminology used herein is for the purpose of description and should not be regarded as limiting. Contrary to the use of "consisting", which is meant to be limiting, the use of "including," "containing", "comprising," or "having" and variations thereof is meant to be not limiting and to encompass the items listed thereafter as well as additional items.

Amounts of ingredients of a composition may be indicated by % by weight (or "% wt". or "wt.-%") unless specified otherwise. The amounts of all ingredients gives 100 % wt unless specified otherwise. If the amounts of ingredients is identified by % mole the amount of all ingredients gives 100% mole unless specified otherwise.

The terms "solid" and "liquid" refer to ambient conditions (23 °C, 1 bar).

Average particle sizes as referred to herein be number averages. In case of particles that are only substantially spherical the particle size is determined by adding the length of the two main (largest orthogonal) axes of the particle and dividing it by two. "Substantially spherical" means one or all main axes (x-, y- or z-axis) may deviate from the required length to form a perfect sphere by up to 50 %, preferably up to 25%.

Parameters as used herein may be preferably determined as more specifically disclosed in the experimental section of this specification.

Unless explicitly stated otherwise, all embodiments and optional features of the present disclosure can be combined freely.

The first aspect of the present disclosure is an adhesive article, comprising
(a) an adhesive layer having a first major surface and a second major surface opposite to the first major surface;
(b) at least one release liner essentially consisting of a fluoropolymer, wherein the release liner has a first major surface and a second major surface opposite the first major surface, wherein either the first or second major surface have a common interface with the first or second major surface of the adhesive layer.

It has been found that an adhesive article comprising at least one release liner consisting essentially of a fluoropolymer is excellently suitable for applications in industrial manufacturing operations, since the liner is chemically inert, exhibits mechanical stability, good release properties and also compatibility towards paints and coatings commonly used in, *inter alia,* automotive industries. Furthermore, there is no danger of bleed-out of silicone- or fluorine-compound containing release compositions onto surfaces which must not be contaminated.

The adhesive article as disclosed herein is preferably in the form and shape of an adhesive strip, adhesive film or adhesive tape. This has the advantage of being useful in industrial bonding applications where at least two parts are adhesively attached and bonded together. For robotic applications, the form of a sheet, and, in particular, the form of a tape is strongly preferred. In this regard, it is preferred that the adhesive article is a double side adhesive tape. Adhesive films, and in particular adhesive tapes, were found to be particularly suited for automatic and robotic applications, i.e. requiring high-throughput while still being capable of delivering the tape in a highly precise fashion, are preferably wound up as a roll, preferably a level-wound roll. This also enables easy and safe shipment of the article. In this regard, it is preferred that the adhesive article is a level-wound roll of a double side adhesive tape.

Preferably, the at least one release liner of the adhesive article according to the present disclosure has a thickness of less than 400 µm, preferably less than 350 µm, more preferably less than 300 µm. Thicknesses higher than envisioned herein may compromise the flexibility of the liner, and add unnecessary weight and thickness to the adhesive article. While flexibility is desired for winding and unwinding the article (when in shape of a tape) onto and from a roll, low weight and low thickness are desirable from space and economic point of view. The thinner the liner, the more adhesive may be rolled onto a roll of a given thickness. Moreover, a roll of a certain dimension could exhibit lower weight when using thinner liners, so that less energy is consumed when shipping, handling and operating the adhesive article. In this regard, it is preferred that the at least one release liner has a thickness in the range of from 5 to 400 µm, preferably in the range of from 10 to 350 µm, more preferably in the range of from 15 to 300 µm. Within these ranges, the liners as described herein exhibit a good combination of stability, mechanical properties, low weight and low dimensions.

The release liner as described herein essentially consists of a fluoropolymer. Essentially consisting means that the liner consists of at least one fluoropolymer or copolymer, and only a minor portion of the liner does not represent a fluoropolymer or copolymer. In particular, it is preferred than less than 10 wt.-%, preferably less than 5 wt.-%, and more preferably less than 1 wt.-% of the liner as described herein are not a fluoropolymer and/or copolymer.

Fluoropolymers, i.e. polymers having a fluorinated backbone, have been long known and have been used in a variety of applications because of several desirable properties such as heat resistance, chemical resistance, weatherability, UV-stability etc. Various fluoropolymers are for example described in "Modern Fluoropolymers", edited by John Scheirs, Wiley Science 1997. The fluoropolymers may have a partially fluorinated backbone, generally at least 40% by weight fluorinated, or a fully fluorinated backbone. Particular examples of fluoropolymers include polytetrafluoroethylene (PTFE), copolymers of tetrafluoroethylene (TFE) and hexafluoropropylene (HFP) (FEP polymers), perfluoroalkoxy copolymers (PFA), ethylene-tetrafluoroethylene (ETFE) copolymers, terpolymers of tetrafluoroethylene, hexafluoropropylene and vinylidene fluoride (THV) and polyvinylidene fluoride polymers (PVDF).

In the context of the present disclosure, it is preferred that the at least fluoropolymer is a polymer or copolymer selected from polytetrafluoroethylene (PTFE), fluorinated propylene ethylene (FEP), and perfluoroalkoxy alkanes (PFA), preferably from propylene ethylenes (FEP). The at least one fluoropolymer is preferred to be able to be processed in melt flow processes and other processes known in the art for obtained shaped articles from fluoropolymers such as films or tapes, i.e. shapes useful for applications as liners for adhesive articles such as films, sheets or tapes. FEP polymers useful in the context of the present disclosure are known, for example, from EP 2821435 A1, the disclosures of which are incorporated herein by reference.

It is often desirable that the two major surfaces of a release liner exhibit different release properties. That is, it is often desirable that one major surface exhibits a lower release force (e.g. peel strength) than the other major surface with regard to the corresponding adhesive layer. This is particularly advantageous when the adhesive article is in the shape of a tape, which is wound into a roll. When unwinding such a roll, it may be desirable that the liner easily separates from the adhesive in the next layer of the tape in the roll in a controlled manner, such that one layer of tape comprising one exposed major surface of the adhesive and the liner covering the other major surface is unwound from the roll. This is often the case in industrial applications, in particular when unwinding the roll is carried out automatically or by robotic means. There may be applications where the adhesive article (in form of a sheet, film or, preferably, a tape) is then attached to a first substrate, and the substrate together with the adhesive (the other major surface still protected by the liner) then undergoes one or several process steps. For instance, paint or coatings may be applied to the substrate, or the substrate may be transformed into another shape, and the like. When the liner is finally removed, a second substrate may be attached to the now-exposed major surface of the adhesive. Thereby, the two substrates are adhesively connected by the adhesive. In some cases, in particular when the adhesive is a structural adhesive, further steps such as curing step may be carried out. This may advantageously be carried out in parallel to other manufacturing steps requiring heat. Accordingly, it is preferred that the first and second surfaces of the release liner exhibit different release forces regarding the adhesive layer, preferably the structural adhesive layer.

Different release forces, i.e. differential release of the first and second major surfaces of the liner of the adhesive article according to the present disclosure may be achieved when the first and second major surfaces of the liner as described herein are first and second release layers, respectively. Hence, it is preferred that the first and/or second major surface of the release liner comprises a release layer. In one embodiment, only the first or second major surface of the liner as described herein comprises a release layer. It is preferred that a release layer as described herein has a different release force with regard to the adhesive layer as described herein than an untreated major surface of the liner. If both first and second major surfaces of the liner comprise a release layer, then it is preferred that the first and second release layers are different. This has the effect that the first and second release layers have different release from the adhesive layer as described herein. In this regard, it is preferred that the first release layer and/or second release layer of the release liner are obtained by surface treatment of the release layer, wherein the surface treatment is selected from chemical treatment and/or microreplication. Chemical treatment means that the upper surface of the fluoropolymer is chemically modified. Usually, this would result in a more reactive upper layer of the fluoropolymer, yielding a loss of performance with regard to release properties. The degree of loss of performance may be controlled by the degree of chemical treatment. Microreplication forms a micro-structured surface of the fluoropolymer layer. It is known from structured liners, i.e. liners having a micro-structured surface that transfer of the structure from the liner to the adhesive may occur, that higher coefficient of friction improves the coating process with the adhesive, and better deaeration of the region between the release liner and adhesive may be yielded.

Preferably, the surface treatment is chemical treatment selected from chemical etching, corona treatment and plasma etching. Chemical etching may be carried out via etching with Na/naphthalene, as disclosed from, for example, Rasche, Adhäsion, 34/3 (1990), p.17-18 "Klebemöglichkeiten von PTFE", for surface modification of PTFE, PFA and FEP. Corona treatment is also well-known in the art for surface-modification of plastic films. The corona treatment leads to the formation of polar groups on the treated surface so that the release properties are reduced. This treatment may be carried out either in the course of the production of the liner or in the course of the coating process, e.g. before the adhesive tape is coated. A method for treating the surface of fluoropolymer films with plasma is described in, for example, US 588594 A1. Treating the surface with plasma may have the effect of obtaining a nanostructure having a high bond strength to adhesives, which is believed to be due to mechanical interlocking of the material at the nanostructured surface. In the context of the present disclosure, plasma treatment is the preferred method for chemical treatment of the fluoropolymer liner surface to obtain a release layer.

It is also preferred that microreplication as surface treatment of the fluoropolymer liner of the adhesive article according to the present disclosure is selected from molding and treatment with embossing roll. The use of molds for microreplication on polymer films is described in, for example, US 20110305787 and US20080315459, respectively, the disclosure of which is hereby incorporated by reference in entirety. Similarly, the use of embossing rolls for microreplication surface treatment of polymer surfaces is known from WO2009131792 (in particular, paragraph [0041] may be cited). Herein, a structure has been applied to a release film with an embossing roll. The surface modification as described in WO2009131792 can be made in the course of the extrusion process, the coating process or in a separate process. Another method for surface modification with an embossing roll is disclosed in US20060138694.

While the use of liners for adhesive articles is absolutely common use in the art, in particular when the adhesive article has the shape of a film, a sheet or a tape, and while it also yields many advantages, it is also seen as a kind of necessary evil since once the liner is removed from the adhesive layer, it merely represents waste which needs to be disposed. The formation of waste and its disposal represents a challenge from an economical and an ecological point of view. This is particularly true for fluoropolymers, which disposal is particularly challenging. Accordingly, it is preferred that the at least one release liner of the adhesive article as described herein comprises at least 10 wt.-%, preferably at least 25 wt.-%, more preferably at least 40 wt.-%, even more preferably at least 60 wt.-% of recycled fluoropolymer. In a further preferred case, the at least one release liner of the adhesive article as described may comprise at least 70 wt.-% or at least 85 wt.-% of recycled fluoropolymer. This has the effect that both economical and ecological costs of the fluoropolymer release liner as used herein may be decreased, while keeping the numerous advantages of the use of a fluoropolymer liner. In this regard, it is preferred that the recycled fluoropolymer is selected from PTFE, PFA and FEP, preferably from FEP. Accordingly, it is preferred that the at least one release layer is obtained from extruding recycled fluoropolymer.

Due to the high thermal stability of fluoropolymers, disposed liners of the adhesive article as described herein may be collected and directly re-extruded into liners. This may be carried out several times without a loss of mechanical or chemical properties. Therefore, this represents a striking advantage of the present disclosure over the prior art, in economical and ecological aspects, taking account the advantageous mechanical and chemical properties such as inertness of the liner. Alternatively, it is preferred that the least one release layer of the adhesive article as described herein is obtained from extruding fluoropolymer obtained from upcycling fluoropolymer. Preferably, upcycling as described herein comprises converting a release liner from an adhesive article according to any one of the preceding claims into perfluoro olefins, producing a fluorinated polymer, and extruding the fluorinated polymer such as to obtain a release liner. Such a process for upcycling has been described in WO2010039820 A1, the disclosures of which are incorporated herein by reference in its entirety.

With regard to the adhesive layer of the adhesive article according to the present disclosure, it is preferably selected from pressure sensitive adhesives and structural adhesives. Both pressure-sensitive and structural adhesives, in particular in shapes of films, sheets or tapes, are well-known in the art for a great variety of applications and purposes. Preferably, the adhesive layer is a structural adhesive.

In this regard, it is preferred that the structural adhesives of the adhesive layer of the adhesive article according to the present disclosure are of the epoxy structural adhesives type. It is preferred that the epoxy structural adhesive comprises at least one epoxy resin and at least one epoxy curing compound.

Epoxy resins are polymeric organic compounds having one or more oxirane ring polymerizable by a ring opening reaction. The epoxy-functionalities allow the resin to undertake cross-linking reactions. Such materials, broadly called epoxides, can be cycloaliphatic or aromatic, which means they have one or more unit that is cycloaliphatic or aromatic. Useful materials generally have at least two polymerizable epoxy groups per molecule and, more preferably, from two to four polymerizable epoxy groups per molecule. Typically, the epoxy resins may have an average epoxy-functionality of at least 1, greater than one, or of at least 2, or from about 1 to 4.

The epoxy resin is preferably free or essentially free of aromatic amine moieties. The term "essentially free" as used herein means that trace amounts may be present, for example, due to impurities present in the starting materials or as a result of production process. Such trace amounts include less than 10,000 ppm, preferably less than 5,000 ppm, based on the total amount of the composition.

Typically, but not exclusively, the epoxy resins contain repeating units derived from monomers having an epoxy-functionality as described above but epoxy resins can also include, for example, silicone-based polymers that contain epoxy groups or organic polymer particles coated with or modified with epoxy groups or particles coated with, dispersed in, or modified with epoxy-groups-containing polymers.

Mixtures of various epoxy resins may also be used in the compositions of the invention. Epoxy resins may be selected from the group consisting of alkylene oxides, alkenyl oxides, glycidyl esters, glycidyl ethers, epoxy novolacs, copolymers of acrylic acid esters of glycidol and copolymerizable vinyl compounds, polyurethane polyepoxides, and mixtures thereof.

Preferably, the epoxy resins contain moieties of the glycidyl, diglycidyl or polyglycidyl ether type. Such epoxy resins may be obtained, for example, by the reaction of a hydroxyl functionality (for example but not limited to dihydric or polyhydric phenols or aliphatic alcohols including polyols) with an epichlorohydrine-functionality. As referred to herein, dihydric phenols are phenols containing at least two hydroxy groups bonded to the aromatic ring (also referred to as "aromatic" hydroxy groups) of a phenol -or in case of polyphenols at least two hydroxy groups are bonded to an aromatic ring. This means the hydroxyl groups can be bonded to the same ring of the polyphenol or to different rings each of the polyphenol. Therefore, the term "dihydric phenols" is not limited to phenols or polyphenols containing two "aromatic" hydroxy groups but also encompasses polyhydric phenols, i.e. compounds having more than two "aromatic" hydroxy groups. Examples of useful dihydric phenols include resorcinol, catechol, hydroquinone, and polyphenols including p,p'-dihydroxydibenzyl, p,p'-dihydroxyphenylsulfone, p,p'-dihydroxybenzophenone, 2,2'-dihydroxyphenyl sulfone, p,p'-dihydroxybenzophenone, 2,2-dihydroxy-1,1-dinaphrhylmethane, and the 2,2', 2,3', 2,4', 3,3', 3,4', and 4,4' isomers of dihydroxydiphenylmethane, dihydroxydiphenyldimethylmethane, dihydroxydiphenylethylmethylmethane, dihydroxydiphenylmethylpropylmethane, dihydroxydiphenylethylphenylmethane, dihydroxydiphenylpropylenphenylmethane, dihydroxydiphenylbutylphenylmethane, dihydroxydiphenyltolylethane, dihydroxydiphenyltolylmethylmethane, dihydroxydiphenyldicyclohexylmethane, and dihydroxydiphenylcyclohexane.

It is preferred that the at least one epoxy resin comprises at least one aromatic moiety. Preferably, the at least one epoxy resin comprises repeating units derived from bisphenol A and epichlorohydrine, bisphenol F and epichlorohydrine or a combination thereof.

Preferred epoxy resins include epoxy resins containing or consisting of glycidyl ethers or polyglycidyl ethers of monohydric, dihydric or polyhydric phenols, such as for example, but not limited to bisphenol A, bisphenol F, including polymers comprising repeating units of these phenols. Preferred epoxy resins include epoxy novolacs. Epoxy novolacs are the reaction product of an epoxy group- introducing agent, such as for example epichlorohydrin, with a condensation product of a mono- di or polyhydric phenol (which may be alkylsubstituted (e.g. cresol) or non-substituted) and an aldehyde, such as for example, formaldehyde. Typical epoxy novolacs are polymers containing glycidyl ether groups and further comprising repeating units derived from bisphenol F or another reaction product of a phenol with an aldehyde. The phenol may be monohydric, dihydric or trihyidric and may be non-substituted or alkyl substituted.

Instead of, or in addition to, the aromatic epoxy resins described above also their fully or partially hydrogenated derivatives (i.e. the corresponding cycloaliphatic compounds) may be used.

The epoxy resins may be liquid at room temperature or solid. Typically, the epoxy resins may have a viscosity of from about 400 mPa.s at 20°C to about 40,000 mPa.s at 50 °C. Preferably, the resin has a viscosity of at least 8,000 mPa s at 20 °C up to 5,000 mPa s at 50 °C.

Examples of commercially available epoxy resins include diglycidylether of bisphenol A (e.g. available under the trade designation EPON 828, EPON 830 or EPON 1001 from Hexion Speciality Chemicals GmbH, Rosbach, Germany, or under the trade designation D.E.R-331 or D.E.R-332 from Dow Chemical Co,); diglycidyl ether of bisphenol F (e.g. EPICLON 830 available from Dainippon Ink and Chemicals, Inc. or D.E.R.-354 from Dow Chemical Co, Schwalbach/Ts., Germany); silicone resins containing diglycidyl epoxy functionalities; flame retardant epoxy resins (e.g. DER 580, a brominated bisphenol type epoxy resin available from Dow Chemical Co.); Other epoxy resins based on bisphenols are commercially available under the trade designations EPIKOTE (Hexion Speciality Chemicals, Rosbach, Germany), or EPILOX (Leuna Epilox GmbH, Leuna, Germany). Epoxy novolacs are available under the trade designation D.E.N. from Dow Chemical Co, Schwalbach/Ts., Germany, such as for example D.E.N 431 (a novolac resin with an average epoxy functionality of 2.8 and a viscosity of from 1100 to 1700 mPa s at 51.7 °C) , D.E.N. 425 a novolac resin with an average epoxy functionality of 2.5 and a viscosity of from 9500 to 12500 mPa s at 25°C, D.E.N. 438 a novolac resin with an average epoxy functionality of 3.6 and a viscosity of from 3100 to 4000 mPa s at 51.7 °C.

Furthermore, the epoxy curing agent may also comprise at least one aliphatic amine, preferably containing at least one primary amine residue and may be branched, cyclic or acyclic.

The aliphatic amines as described herein may be linear or branched amines of the general structure: 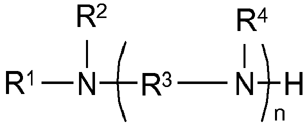 wherein
the residues R¹, R², and R⁴, independently from each other, may represent hydrogen or a hydrocarbon (such as an alkyl) or an alkoxy or a polyoxyalkyl residue. R³ represents a hydrocarbon, an alkylether or a polyether alkyl residue. More preferably R³ is a polyetheralkyl residue. Preferably, the residues R¹, R², and R⁴ are chosen such that the amine contains at least one or two primary amine groups;
n represents an integer.

Suitable polyether amines include those that can be derived from polypropylene oxide or polyethylene oxide.

It is further preferred that the structural adhesive of the adhesive layer of the adhesive article according to the present disclosure further comprises at least one thermoplastic resin, at least one toughening agent (preferably selected from butadiene rubbers and core-shell rubbers), at least one curative accelerator, and/or at least one physical blowing agent.

In a preferred aspect, thermoplastic resins for use herein have a Tg (glass transition temperature measured by differential scanning calorimetry (DSC)) comprised between 70 °C and 120 °C, preferably between 80 °C and 100 °C, more preferably between 85 °C and 95 °C. Suitable thermoplastic resins for use herein are preferably selected from the group consisting of polyether thermoplastic resins, polypropylene thermoplastic resins, polyvinyl chloride thermoplastic resins, polyester thermoplastic resins, polycaprolactone thermoplastic resins, polystyrene thermoplastic resins, polycarbonate thermoplastic resins, polyamide thermoplastic resins, and any combinations of mixtures thereof.

Suitable thermoplastic resins for use herein may be advantageously selected from the group of polyether thermoplastic resins, and preferably polyhydroxyether thermoplastic resins. In a preferred aspect, thermoplastic resins for use herein are selected from the group of polyhydroxyether thermoplastic resins, which are preferably selected from the group consisting of phenoxy resins, polyether diamine resins, polyvinylacetal resins, in particular polyvinyl butyral resins, and any combinations or mixtures thereof. Examples of suitable polyvinylacetal resins for use herein include Vinyl Chloride/Vinyl Acetate Copolymers, Carboxyl-Modified Vinyl Copolymers, and Hydroxyl-Modified Vinyl Copolymers, commercially available from Dow Chemicals. In a very preferred aspect of the disclosure, the thermoplastic resin for use herein is selected from the group of phenoxy resins. Suitable thermoplastic resins for use herein are commercially available from Gabriel Performance Productsunder trade designation PKHP, PKHH, PKHA, PKHB, PKHC, PKFE, PKHJ, PKHM-30 or PKHM-301.

Preferred epoxy structural adhesive compositions and structural adhesives films which are particular useful in combination with the liner according to the present disclosure are disclosed in EP 2700683 A1, WO 2017/087295 A1 and WO 2017/087651 A2, the disclosure of which are explicitly incorporated herein by reference in its entirety.

A preferred example for a pressure-sensitive adhesive useful as adhesive layer in the context of the present disclosure is the acrylic foam tape commercially available under the trade designation VHB 4905 9019 7 from 3M Company (St. Paul, USA).

Due to the combination of excellent properties of the adhesive article as described herein, the present disclosure a use of the adhesive article in manufacturing processes in aerospace, automotive, abrasives or electronics industries. Preferably, the use comprises manufacturing processes in automotive industries, preferably in body-in-white processes.

### Examples

The present disclosure is further described without however wanting to limit the disclosure thereto. The following examples are provided to illustrate certain embodiments but are not meant to be limited in any way. Prior to that some test methods used to characterize materials and their properties will be described. All parts and percentages are by weight unless otherwise indicated.

### Test Methods

### 180 °-Peel-adhesion test at 305 mm/min (according to Test Method PSTC 101, test method D):

This peel adhesion test measures the effectiveness of release liners that are conditioned for 72 hours at a constant temperature and relative humidity (23 °C +/- 2 °C, 50% relative humidity +/-5 %) prior to testing. The aged release value is hereby a quantitative measure of the force required to remove a release liner from the flexible adhesive at a specific angle and rate of removal.

The 180° angle peel adhesion strength was measured for all test samples in accordance with the test method described in Pressure Sensitive Tape Council PSTC-101 Method D (Rev 05/07) 'Peel Adhesion of Pressure Sensitive Tape.

For testing stainless steel test panels having a dimension of 126 mm x 50 mm x 2 mm (commercially available from Rocholl GmbH) were used as test substrate and cleaned prior to use. The testing samples obtained for the peel adhesion measurements were cut in machine direction to a width of 25 mm and a length of approximately 300 mm using a cutter consisting of two razor blades set apart by 25 mm. All testing samples had as common construction a centered epoxy adhesive film covered by two opposing, protective liners.

After the testing samples were cut to the required dimension, the respective protective liner, which was not subject to peel adhesion testing, was removed from one side of the epoxy adhesive film. Then approximately 125 mm of the now linerless epoxy adhesive side was placed upon the cleaned stainless steel panel and rubbed down on the test panel using light thumb pressure.

The remaining liner on the upper side of epoxy adhesive film was then separated from the epoxy adhesive film at the free end and the free part of the epoxy adhesive film, which was not bonded to the test panel, was cut away. The liner on top of the epoxy adhesive film part adhered to the test panel was hereby left undisturbed.

For peel adhesion testing the test panel with the applied testing sample was in a first step clamped into the lower movable jaw of a constant-rate-of extension (CRE) tensile tester (Model Z020 commercially available from Zwick/Roell GmbH, Ulm, Germany) and the free end of the liner grasped in the upper jaw of the tensile tester in a configuration commonly utilized for 180° peel adhesion measurements. The tensile tester was set at 305 mm/min. jaw separation rate. After the movable jaw had started in motion the first values obtained during the first 24mm of the mechanical peeling were disregarded. Test results are expressed in Newton per cm (N/cm). The quoted peel values are the average of five 180°-peel measurements.

### Epoxy adhesive film preparation

The epoxy-based composition for providing a thermosettable epoxy adhesive film was prepared by combining the ingredients from the list of materials of table 2 in a high speed mixer (DAC 150 FVZ Speedmixer, commercially available from Hauschild Engineering) stirring at 3000 rpm. In Table 4, all concentrations are given as wt.-%.

In a first step the epoxy resin, the thermoplastic phenoxy resin and the core shell toughening agent were mixed together for 2 minutes. This formulation was then placed into an air-driven oven at temperature of 95 °C for about 1 h. The hot mixture was again stirred for 2 minutes at 3000 rpm in the speed mixer to ensure complete dispersion of the three ingredients. Then the mixer temperature was reduced to 60 °C and the two curatives together with the further ingredients as set forth in table 4 were added to the mixture, followed by mixing for an additional 2 minutes under vacuum. The resulted mixture was a paste having a uniform consistency. By using a knife coater the mixer was hot coated to a film having thickness of 0.4 mm. The formed film was soft and homogenous when cooled down. For better handling and transport the epoxy adhesive film was placed in between two opposing, protective liners as described below.

**Table 1: Composition of epoxy adhesive film composition.**

| Raw Materials | wt.-% |
|---|---|
| Epikote Resin 828 | 54.5 |
| PKHP-200 | 26 |
| Paraloid EXL 2650J | 13.5 |
| Amicure CG1200 | 3.3 |
| Omicure U52M | 1.5 |
| Microsphere®F48D | 1.2 |
| Sum | 100.0 |

### Test sample preparation

The resulting adhesive release liner constructions were allowed to dwell for 72 hours at ambient room temperature (23 °C + 2 °C) and 50 % (+/- 5 %) relative humidity prior to testing. These were then cut in machine direction to a width of 25 mm and a length of approximately 300 mm as previously described for peel adhesion testing and peel testing performed in accordance with Pressure Sensitive Tape Council PSTC-101 Method D (Rev 05/07) 'Peel Adhesion of Pressure Sensitive Tape.

### Test results

All testing samples were subjected to 180° peel testing according to test method PSTC 101, test method D and the resulting peel adhesion values listed in table 5.

### Pressure Sensitive Adhesive Tape

As pressure sensitive adhesive tape, a double-sided acrylic foam tape available from 3M under the trade designation VHB 4950F was used. As liners, FEP film having a thickness of approx. 150 µm was used, and a PTFE film having about the same thickness as the FEP film was used. This was compared to the original liner of the VHB 4950F tape as commercially available. Release forces are summarized as mean value of three measurement experiments in table 2 below.

**Table 2: Comparison of release forces of acrylic pressure sensitive adhesive film.**

| Liner | FEP | PTFE | Original |
|---|---|---|---|
| 180 ° Peel Force (ambient 3 days) N/cm | 0.3794 | 0.652 | 1.5922 |

### Structural Adhesive Tape

The epoxy structural adhesive films as described above were tested. As liners, FEP film having a thickness of approx. 150 µm was used, and a PTFE film having about the same thickness as the FEP film was used. This was compared to the original liner of the VHB 4950F tape as commercially available. Release forces are summarized as mean value of three measurement experiments in table 3 below.

**Table 3: Comparison of release forces of epoxy structural adhesive film.**

| Liner | FEP | PTFE | Original |
|---|---|---|---|
| 180 ° Peel Force (ambient 3 days) N/cm | 0.2897 | 0.5679 | 1.4099 |

Both FEP and PTFE release liner containing adhesive articles were also found to be compatible with common paints used in automotive industries.

## Claims

1. An adhesive article, comprising
(a) an adhesive layer having a first major surface and a second major surface opposite to the first major surface;
(b) at least one release liner essentially consisting of a fluoropolymer, wherein the release liner has a first major surface and a second major surface opposite the first major surface, wherein either the first or second major surface have a common interface with the first or second major surface of the adhesive layer.

2. The adhesive article according to claim 1, wherein the adhesive article is an adhesive strip, adhesive film or adhesive tape, preferably an adhesive tape.

3. The adhesive article according to claim 1 or claim 2, wherein the adhesive layer is selected from pressure sensitive adhesives and structural adhesives, preferably from structural adhesives.

4. The adhesive article according to claim 3, wherein the structural adhesive comprises at least one epoxy resin and at least one epoxy curing agent.

5. The adhesive article according to claim 3 or claim 4, wherein the structural adhesive further comprises at least one thermoplastic resin, at least one toughening agent (preferably selected from butadiene rubbers and core-shell rubbers), at least one curative accelerator, and/or at least one physical blowing agent.

6. The adhesive article according to any one of the preceding claims, wherein the at least fluoropolymer is a polymer or copolymer selected from polytetrafluoroethylene (PTFE), fluorinated propylene ethylene (FEP), and perfluoroalkoxy alkanes (PFA).

7. The adhesive article according to any one of the preceding claims, wherein the at least one fluoropolymer is selected from fluorinated propylene ethylenes (FEP).

8. The adhesive article according to any one of the preceding claims, wherein the first major surface comprises a first release layer and the second major surface comprises a second release layer, wherein the first and second release layers are different.

9. The adhesive article according to any one of the preceding claims, wherein the first and second surfaces of the release liner exhibit different release forces regarding the adhesive layer.

10. The adhesive article according to any one of the preceding claims, wherein the first release layer and/or second release layer of the release liner are obtained by surface treatment of the release layer, wherein the surface treatment is selected from chemical treatment and/or microreplication.

11. The adhesive article according to any one of the preceding claims, wherein the adhesive article is wound up as a roll, preferably a level-wound roll.

12. The adhesive article according to any one of the preceding claims, wherein the at least one release liner comprises at least 10 wt.-%, preferably at least 25 wt.-%, more preferably at least 40 wt.-% of recycled fluoropolymer.

13. The adhesive article according to claim 12, wherein the at least one release layer is obtained from extruding recycled fluoropolymer, preferably obtained from upcycling fluoropolymer.

14. The adhesive article according to any one of the preceding claims, wherein the at least one release liner has a thickness in the range of from 5 to 400 µm, preferably in the range of from 10 to 350 µm, more preferably in the range of from 15 to 300 µm.

15. Use of the article according to any one of the preceding claims in manufacturing processes in aerospace, automotive, abrasives or electronics industries, preferably in body-in-white processes in automotive industries.
